# EUROPEAN PATENT APPLICATION

(11) **EP 4 647 861 A1**
(43) Date of publication of application: **12.11.2025**
(21) Application number: 24741205.9
(22) Date of filing: 08.01.2024
(51) Int. Cl.: G05D 1/00, E04H 4/16, E04H 4/12, G01F 23/292, G01F 23/2962

(54) **POOL WATER LEVEL LINE DETECTION DEVICE AND WATER LEVEL LINE INFORMATION ACQUISITION METHOD**

(30) Priority: 09.01.2023 CN 202310026006; 17.03.2023 CN 202310264546
(71) Applicant: Wybotics Co., Ltd, Tianjin 300462 (CN)
(72) Inventor: LI, Cheng, Tianjin 300462 (CN); WANG, Youjiang, Tianjin 300462 (CN); GUAN, Shouqiang, Tianjin 300462 (CN); WANG, Mengqi, Tianjin 300462 (CN)
(74) Representative: Winter, Brandl - Partnerschaft mbB
(86) International application number: PCT/CN2024/071212
(87) International publication number: WO 2024/149206

(57) **Abstract**

The present disclosure discloses a method for obtaining waterline information, where the method includes: obtaining waterline information by means of a detection unit of a pool cleaning robot, the pool cleaning robot moving on a pool wall or pool bottom of a pool, and the waterline information being used for representing a relative position between the pool cleaning robot and the waterline; determining a distance between the pool cleaning robot and the waterline on the basis of the waterline information; and controlling the pool cleaning robot on the basis of the distance between the pool cleaning robot and the waterline.

## Description

### CROSS REFERENCE TO RELATED APPLICATIONS

The present disclosure claims priority to Chinese Patent Application No. 2023100260065 titled "METHOD AND APPARATUS FOR OBTAINING WATERLINE INFORMATION, AND POOL CLEANING ROBOT" and filed on January 9, 2023, and to Chinese Patent Application No. 2023102645467 titled "POOL WATERLINE DETECTION APPARATUS, POOL CLEANING DEVICE, DETECTION METHOD, AND CONTROL METHOD" and filed on March 17, 2023, the entire contents of which are incorporated herein by reference.

### TECHNICAL FIELD

The present disclosure relates to the field of robot technology, and more particularly, to a pool waterline detection apparatus, a pool cleaning robot, a method for obtaining waterline information, and an apparatus for obtaining waterline information.

### BACKGROUND

With the development of computer technologies, robot technologies have also developed rapidly. For example, customers use vacuum cleaning robots to clean floors of houses, use window cleaning robots to clean windows of the houses, and use pool cleaning robots to clean pools.

When using the pool cleaning robots to clean pool walls of the pools, waterlines of the pools are important reference positions, and how to recognize the waterlines is a hot research topic.

### SUMMARY

Embodiments of the present disclosure provide a pool waterline detection apparatus, a pool cleaning robot, a method for obtaining waterline information, and an apparatus for obtaining waterline information. The technical solutions are as follows.

In one aspect, a pool waterline detection apparatus is provided, which includes:
an auxiliary container (21) provided with an opening; and
a detection unit (22) positioned on a side of the opening, where the detection unit (22) is configured to transmit, to the opening, a probing signal towards an outer side of the auxiliary container (21), to determine a relative position between the waterline detection apparatus and a pool waterline.

In one aspect, a pool cleaning robot is provided, which includes:
a housing (1); and
the pool waterline detection apparatus (2) according to any one of claims 1 to 4, where the pool waterline detection apparatus (2) is mounted on the housing (1), and an orientation of the opening of the auxiliary container (21) of the pool waterline detection apparatus (2) is consistent with a travel direction of the pool cleaning robot.

In one aspect, a method for obtaining waterline information is provided, which includes:
obtaining waterline information by means of a detection unit of a pool cleaning robot, the pool cleaning robot moving on a pool wall or pool bottom of a pool, and the waterline information being configured for representing a relative position between the pool cleaning robot and the waterline;
determining a distance between the pool cleaning robot and the waterline on the basis of the waterline information; and
controlling the pool cleaning robot on the basis of the distance between the pool cleaning robot and the waterline.

In one aspect, an apparatus for obtaining waterline information is provided, which includes:
a waterline information obtaining module configured to obtain waterline information by means of a detection unit of a pool cleaning robot, the pool cleaning robot moving on a pool wall or pool bottom of a pool, and the waterline information being configured for representing a relative position between the pool cleaning robot and the waterline;
a distance determining module configured to determine a distance between the pool cleaning robot and the waterline on the basis of the waterline information; and
a control module configured to control the pool cleaning robot on the basis of the distance between the pool cleaning robot and the waterline.

In one aspect, there is provided a computer-readable storage medium, which stores at least one computer program loaded by a processor to execute the following steps of:
obtaining waterline information by means of a detection unit of a pool cleaning robot, the pool cleaning robot moving on a pool wall or pool bottom of a pool, and the waterline information being configured for representing a relative position between the pool cleaning robot and the waterline;
determining a distance between the pool cleaning robot and the waterline on the basis of the waterline information; and
controlling the pool cleaning robot on the basis of the distance between the pool cleaning robot and the waterline.

In one aspect, there is provided a computer program product or computer program, which includes a program code stored in the computer-readable storage medium. The processor of a robot controller reads the program code from the computer-readable storage medium and executes it, causing the robot controller to perform the following steps:
obtaining waterline information by means of a detection unit of a pool cleaning robot, the pool cleaning robot moving on a pool wall or pool bottom of a pool, and the waterline information being configured for representing a relative position between the pool cleaning robot and the waterline;
determining a distance between the pool cleaning robot and the waterline on the basis of the waterline information; and
controlling the pool cleaning robot on the basis of the distance between the pool cleaning robot and the waterline.

### BRIEF DESCRIPTION OF THE DRAWINGS

To describe the technical solutions in the embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a schematic structural diagram of a pool cleaning robot provided in an embodiment of the present disclosure;
FIG. 2 is a top view of a waterline detection apparatus in the pool cleaning robot in FIG. 1;
FIG. 3 is a cross-sectional view, along Line A-A, of the waterline detection apparatus in FIG. 2;
FIG. 4 is a flowchart of a pool waterline detection method provided in an embodiment of the present disclosure;
FIG. 5 is a flowchart of another pool waterline detection method provided in an embodiment of the present disclosure;
FIG. 6 is a flowchart of a control method for a pool cleaning robot provided in an embodiment of the present disclosure;
FIG. 7 is a schematic diagram of a pool cleaning robot on a pool wall provided in an embodiment of the present disclosure;
FIG. 8 is a flowchart of a method for obtaining waterline information provided in an embodiment of the present disclosure;
FIG. 9 is a flowchart of another method for obtaining waterline information provided in an embodiment of the present disclosure;
FIG. 10 is a schematic structural diagram of a pool waterline detection apparatus provided in an embodiment of the present disclosure;
FIG. 11 is a schematic structural diagram of a control apparatus for a pool cleaning robot provided in an embodiment of the present disclosure;
FIG. 12 is a schematic structural diagram of an apparatus for obtaining waterline information provided in an embodiment of the present disclosure; and
FIG. 13 is a schematic structural diagram of a robot controller provided in an embodiment of the present disclosure.

### Reference numerals in the accompanying drawings:

1-housing; 111-back; 112-belly; 121-robot head end; 122-robot tail end; 13-roller;
2-pool waterline detection apparatus; 21-auxiliary container; and 22-detection unit.

### DETAILED DESCRIPTION

To make the objectives, technical solutions and advantages of the present disclosure clearer, the embodiments of the present disclosure will be further described in detail below with reference to the accompanying drawings.

Terms such as "first" and "second" in the present disclosure are used to distinguish between the same or similar items whose roles and functions are basically the same. It should be understood that there is no logical or temporal dependency between "first", "second", and "nth", nor is there a limitation on quantity and execution order.

Path planning: the path planning is one of main research topics in motion planning. The motion planning is comprised of path planning and trajectory planning. Sequence points or curves connecting starting positions and end positions are called paths, and strategies that constitute the paths are called the path planning. In the embodiments of the present disclosure, the path planning for a pool cleaning robot is also planning of cleaning paths for the pool cleaning robot.

The pool cleaning robot is a robot used for cleaning a pool, where cleaning the pool includes cleaning a pool bottom of the pool and cleaning pool walls of the pool.

In related technologies, when cleaning waterlines of pools, i.e., pool walls of the pools such as swimming pools, bathing pools and fish ponds, it is necessary for the pool cleaning robot to move near the waterlines of the pools to clean different positions. Therefore, how to recognize the waterlines of the pools is an urgent problem to be solved at present.

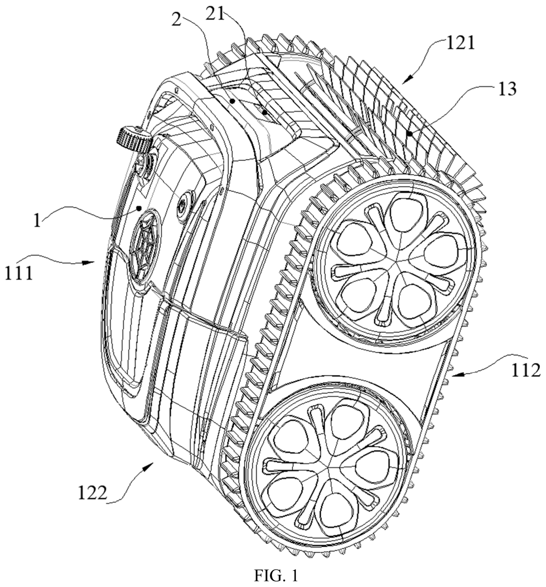

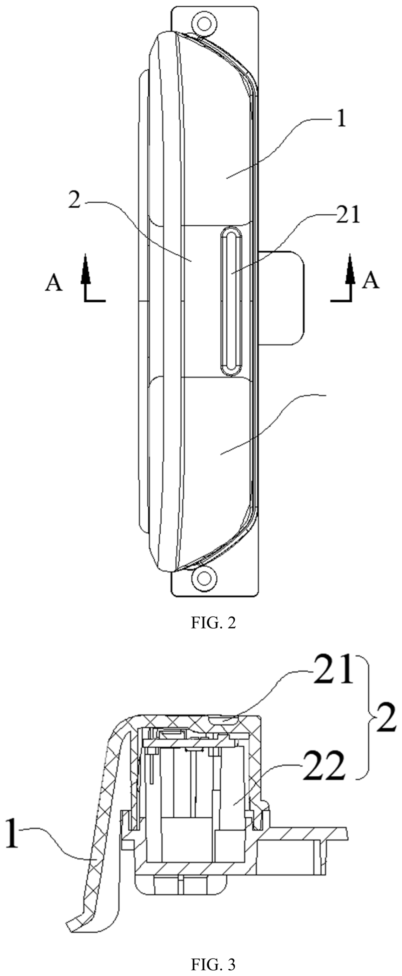

Referring to FIGS. 1 to 3, FIG. 1 is a schematic structural diagram of a pool cleaning robot provided in an embodiment of the present disclosure; FIG. 2 is a top view of a waterline detection apparatus in the pool cleaning robot in FIG. 1; and FIG. 3 is a cross-sectional view, along Line A-A, of the waterline detection apparatus in FIG. 2. First, a first aspect of the present disclosure proposes a pool waterline detection apparatus 2, which includes an auxiliary container 21 and a detection unit 22.

The auxiliary container 21 is provided with an opening.

The detection unit 22 is positioned on a side of the opening; and the detection unit 22 is configured to transmit, to the opening, a probing signal towards an outer side of the auxiliary container 21, to determine a relative position between the waterline detection apparatus and a pool waterline.

A waterline of a water surface of a pool is the pool waterline. The auxiliary container 21 is used for storing water, and a waterline of a water surface of the auxiliary container 21 is a container waterline. The detection unit 22 is arranged below a plane where the opening of the auxiliary container 21 (i.e., the container waterline) is, and the detection unit 22 may transmit, to the opening of the auxiliary container 21, a probing signal towards the outer side of the auxiliary container 21.

When the pool waterline detection apparatus 2 is positioned below the pool waterline, the auxiliary container 21 does not function, and the detection unit 22 detects the pool waterline all along. When the pool waterline detection apparatus 2 is positioned above the pool waterline, that is, after the auxiliary container 21 emerges from the water surface, the detection unit 22 detects the container waterline instead of the pool waterline.

Because the relative positions between the pool waterline detection apparatus 2 and the pool waterline are different, a time difference between a reflected signal reflected by the pool waterline or container waterline detected by the detection unit 22 and the probing signal changes accordingly. Therefore, in this solution, by arranging the detection unit 22 and the auxiliary container 21, the relative position between the pool waterline detection apparatus 2 and the pool waterline may be determined on the basis of the reflected signal reflected by the pool waterline or container waterline detected by the detection unit 22, thereby recognizing the pool waterline.

To clarify a layout structure of the technical solutions of the present disclosure, a pool waterline detection method is described in detail below regarding how to determine the relative position between the pool waterline detection apparatus 2 and the pool waterline on the basis of the reflected signal reflected by the pool waterline or container waterline detected by the detection unit 22.

In some embodiments of the present disclosure, the detection unit 22 is arranged on a side of a bottom of the auxiliary container 21 facing away from the opening.

A transmission part is formed on the bottom of the auxiliary container 21 to transmit the probing signal generated by the detection unit 22.

It should be noted that to detect the container waterline, the detection unit 22 needs to be positioned on the underside of the opening. The detection unit 22 is arranged on the side of the bottom of the auxiliary container 21 facing away from the opening, that is, on the side of the bottom of the auxiliary container 21 away from the opening. For the auxiliary container 21 with the bottom, the detection unit 22 may be arranged on the underside of the bottom of the auxiliary container 21. The transmission part at the bottom of the auxiliary container 21 may be made of a material and have a thickness that may be penetrated by the probing signal. The thickness of the transmission part may be determined according to different probing signals, and the material of the transmission part may be transparent or semitransparent material such as polycarbonate (PC).

In the above technical solutions, the detection unit 22 is arranged on the side of the bottom of the auxiliary container 21 away from the opening, that is, the detection unit 22 is arranged on the underside of the bottom of the auxiliary container 21, such that the bottom of the auxiliary container 21 is positioned between the detection unit 22 and the opening of the auxiliary container 21. By arranging the transmission part at the bottom of the auxiliary container 21, transmission of the probing signal may be ensured.

In some embodiments of the present disclosure, the bottom of the auxiliary container 21 is provided with a mounting hole.

The detection unit 22 is arranged on a side of the bottom of the auxiliary container 21 facing towards the opening; and the detection unit 22 is arranged in the mounting hole or arranged in an accommodating chamber of the auxiliary container 21 through the mounting hole.

It may be understood that the mounting hole may be a blind hole or a through hole. When the mounting hole is the through hole, a sealing apparatus such as a sealing ring may be arranged at the through hole to prevent the auxiliary container 21 from leaking and thus causing changes in the container water level when the pool waterline detection apparatus 2 is positioned above the pool waterline.

It should be noted that to detect the container waterline, in addition to arranging the detection unit 22 at the underside of the bottom of the auxiliary container 21 in the above embodiments, in the embodiments of the present disclosure, the detection unit 22 may also be arranged at the bottom of the auxiliary container 21 or in the accommodating chamber through the mounting hole. Specifically, in one possible implementation, the detection unit 22 is directly arranged in the mounting hole at the bottom of the auxiliary container 21. In another possible implementation, the detection unit 22 is connected to the bottom of the auxiliary container 21 through the mounting hole, such that the detection unit 22 is positioned in the accommodating chamber of the auxiliary container 21. In the above two cases, both the mounting hole and the accommodating chamber have a smaller volume, and the detection unit 22 needs to have a small shape.

The solutions in the embodiments of the present disclosure can avoid adverse impacts of a bottom solid structure between the detection unit 22 and the opening, which may further improve accuracy and reliability of recognizing the pool waterline.

In some embodiments of the present disclosure, the detection unit 22 comprises at least one of an infrared sensor, a laser sensor, and an ultrasonic sensor.

A distance between a transmitting terminal or receiving terminal of the ultrasonic sensor and the opening is greater than or equal to 3 cm.

In the embodiments of the present disclosure, the detection unit 22 may use a variety of sensors to recognize the pool waterline. Specifically, the detection unit 22 may use the infrared sensor, the laser sensor, or the ultrasonic sensor. Probing signals transmitted by the infrared sensor and the laser sensor are infrared ray and laser light, respectively, both of which are electromagnetic waves. The probing signal transmitted by the ultrasonic sensor is an ultrasonic wave, which is a mechanical wave with an extremely short wavelength. The shorter wavelength of the ultrasonic wave makes it easier to suffer from loss and scattering in air. To avoid occurrence of a non-detection zone in the ultrasonic sensor, the distance between the transmitting terminal or receiving terminal of the ultrasonic sensor and the opening is set to be greater than or equal to 3 cm.

Second, referring to FIG. 1, a second aspect of the present disclosure also proposes a pool cleaning robot, which includes a housing 1 and the pool waterline detection apparatus 2 as described in any one of the embodiments of the first aspect.

The pool waterline detection apparatus 2 is mounted on the housing 1; and an orientation of the opening of the auxiliary container 21 of the pool waterline detection apparatus 2 is consistent with a travel direction of the pool cleaning robot. In some embodiments, the pool cleaning robot is also referred to as a pool cleaning device.

Next, operating principles of the pool cleaning robot in the present disclosure are briefly introduced. Referring to FIG. 1, the housing 1 is internally provided with a flow channel, on which a water pump and a strainer are arranged. A water inlet of the flow channel is positioned at a belly 112 of the housing 1, and a water outlet of the flow channel is positioned at a back 111 of the housing 1. Under the action of the water pump, a water flow continuously enters a water channel from the water inlet, and then flows out of the water outlet after being filtered by the strainer. A pressure difference between the water inlet and the water outlet allows the pool cleaning robot to obtain pressure tightly pressing the pool cleaning robot against the pool wall. The housing 1 is also provided with a motor, a driving wheel, a driven wheel, a transmission mechanism, and a roller 13. The motor drives the driving wheel to rotate, such that the driving wheel drives the driven wheel and the roller 13 to rotate by means of the transmission mechanism, thereby driving the pool cleaning robot to travel. The roller 13 disturbs and cleans debris on a surface of the pool wall, allowing sewage water to enter the water inlet under the action of negative pressure of the water inlet. The sewage water entering the water inlet is filtered by the strainer and then drains from the water outlet. A sewage inlet is formed at an upstream side of the strainer near the water inlet, and sewage intercepted by the strainer is collected after entering the sewage inlet.

According to the solutions in the embodiments of the present disclosure, the auxiliary container 21 with the opening is arranged on the housing 1, and the orientation of the opening is consistent with the travel direction of the housing 1. For example, when the opening is positioned at a robot head end 121 of the housing 1, the orientation of the opening is consistent with a forward travel direction of the housing 1; when the opening is positioned at a robot tail end 122 of the housing 1, the orientation of the opening is consistent with a reverse travel direction of the housing 1.

The pool waterline detection apparatus 2 is mounted on the housing 1 of the pool cleaning robot. Therefore, similar to the pool waterline detection apparatus 2, when the pool cleaning robot is positioned below the pool waterline, the auxiliary container 21 does not function, and the detection unit 22 detects the pool waterline all along. When the pool cleaning robot is positioned above the pool waterline, that is, after the auxiliary container 21 on the housing 1 emerges from the water surface, the detection unit 22 detects the container waterline instead of the pool waterline.

Because the relative positions between the pool cleaning robot and the pool waterline are different, the time difference between a reflected signal reflected by the pool waterline or container waterline detected by the detection unit 22 and the probing signal changes accordingly. Therefore, in this solution, by means of the detection unit 22 arranged on the housing 1 of the pool cleaning robot and the auxiliary container 21 having the opening facing in the same direction as the travel direction of the pool cleaning robot, the relative position between the pool cleaning robot and the pool waterline may be determined on the basis of the reflected signal reflected by the pool waterline or container waterline detected by the detection unit 22. In this way, the pool waterline may be recognized.

Similar to the pool waterline detection apparatus 2 in the above embodiments, to clarify the layout structure of the technical solutions of the present disclosure, a pool waterline detection method is described in detail below regarding how to determine the relative position between the pool cleaning robot and the pool waterline on the basis of the reflected signal reflected by the pool waterline or container waterline detected by the detection unit 22.

In some embodiments of the present disclosure, the auxiliary container 21 of the pool waterline detection apparatus 2 is integrally formed with the housing 1.

In the solutions of the embodiments of the present disclosure, the housing 1 of the pool cleaning robot may be integrally formed with the auxiliary container 21 by means of processing techniques such as stamping and injection molding. In this way, on one hand, manufacturing, processing and assembly processes of the housing 1 of the pool cleaning robot and the auxiliary container 21 may be simplified. On the other hand, leakproofness of the housing 1 of the pool cleaning robot and the auxiliary container 21 may be ensured, so there is no need to provide an additional sealing structure between the housing 1 of the pool cleaning robot and the auxiliary container 21.

In some embodiments of the present disclosure, the pool waterline detection apparatus 2 includes a first pool waterline detection apparatus and/or a second pool waterline detection apparatus. The first pool waterline detection apparatus is positioned near the robot head end 121 of the housing 1; and the second pool waterline detection apparatus is positioned near the robot tail end 122 of the housing 1.

In the embodiments of the present disclosure, the first pool waterline detection apparatus may be arranged only at the position of the back 111 of the housing 1 near the robot head end 121, as shown in FIG. 1. The second pool waterline detection apparatus may be arranged only at the position of the back 111 of the housing 1 near the robot tail end 122. Considering that two ends of the pool cleaning robot can recognize the pool waterline, in the present disclosure, the first pool waterline detection apparatus and the second pool waterline detection apparatus may also be simultaneously arranged at the position of the housing 1 near the robot head end 121 and at the position of the housing 1 near the robot tail end 122, respectively.

It should be noted that, on one hand considering structural limitations of the pool cleaning robot, and on the other hand considering that part of the housing 1 needs to emerge from the water surface when the pool cleaning robot cleans the pool waterline, in the embodiments of the present disclosure, the pool waterline detection apparatus 2 is arranged near the robot head end 121 or the robot tail end 122 of the housing 1, rather than is directly arranged at the robot head end 121 or the robot tail end 122. Of course, in some possible implementations, such as not considering the structural limitations of the pool cleaning robot, when the pool waterline detection apparatus 2 is arranged at the robot head end 121 or the robot tail end 122 of the housing 1, good cleaning effects of the pool waterline may be achieved by delaying the control of the movement of the pool cleaning robot.

In the embodiments of the present disclosure, by arranging a plurality of pool waterline detection apparatuses 2, the pool cleaning robot can detect the pool waterline in both a forward direction and a backward direction.

In some embodiments of the present disclosure, the first pool waterline detection apparatus and/or the second pool waterline detection apparatus are arranged on the back 111 of the housing 1.

The pool waterline detection apparatus 2 includes a third pool waterline detection apparatus arranged on the belly 112 of the housing 1; and the third pool waterline detection apparatus is positioned near the robot head end 121 or the robot tail end 122 of the housing 1.

To improve operating reliability of the pool cleaning robot, with reference to the specific structure of the pool cleaning robot, when the roller 13 is provided at the position of the belly 112 of the housing 1 near the robot head end 121 of the housing 1, as shown in FIG. 1, in the embodiments of the present disclosure, the third pool waterline detection apparatus may also be arranged at the position of the belly 112 of the housing 1 near the robot tail end 122. Of course, when the roller 13 is arranged at the position of the belly 112 of the housing 1 near the robot tail end 122 instead of the robot head end 121 of the housing 1, the third pool waterline detection apparatus may also be arranged at the position of the belly 112 of the housing 1 near the robot head end 121.

In the above embodiments, by arranging the third pool waterline detection apparatus, one of the third pool waterline detection apparatus and the second pool waterline detection apparatus may be in service while the other one is in standby, thereby effectively improving device redundancy.

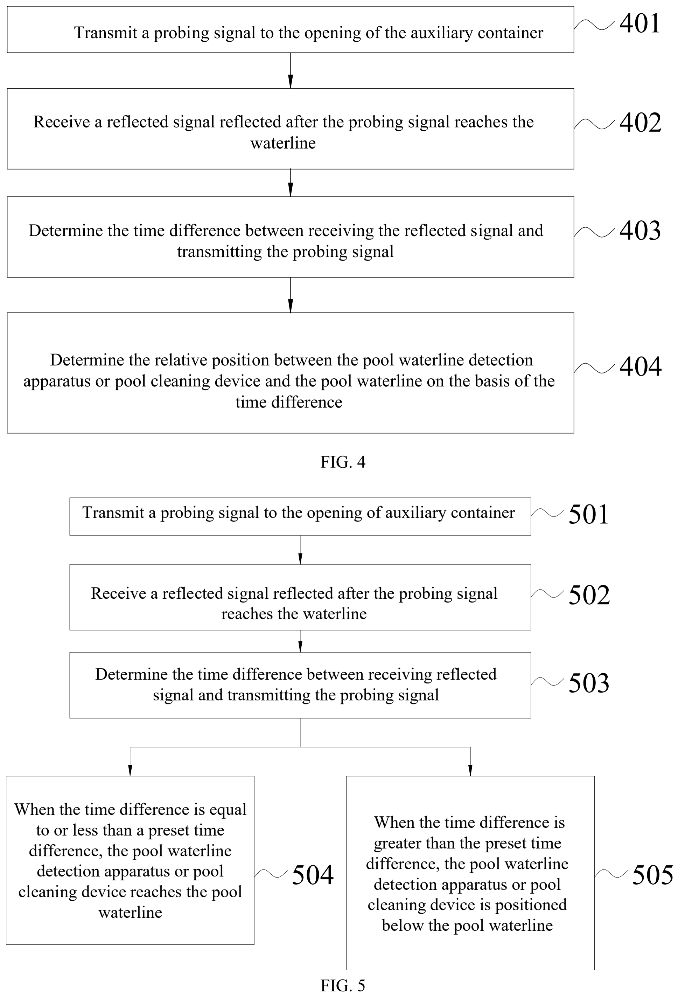

FIG. 4 is a flowchart of a pool waterline detection method provided in an embodiment of the present disclosure. Referring to FIG. 4, the present disclosure proposes a pool waterline detection method, which is used in the pool waterline detection apparatus 2 or pool cleaning robot described in any one of the above embodiments. The method comprises following steps.

In Step 401, a probing signal is transmitted to the opening of the auxiliary container.

No matter which type of sensors is used in the detection unit 22, it has both the transmitting terminal and the receiving terminal. As can be seen from the embodiments of the pool waterline detection apparatus 2 and the pool cleaning robot mentioned above, the detection unit 22 is positioned below the opening of the auxiliary container 21, that is, below the container waterline. Therefore, the transmitting terminal of the detection unit 22 may be aligned with the opening of the auxiliary container 21 to transmit the probing signal. The probing signal may be transmitted according to certain laws. In one possible implementation, the probing signal may be periodically transmitted at preset intervals to continuously detect the pool waterline. In another possible implementation, the probing signal may also be transmitted under certain conditions. For example, when the pool waterline detection apparatus 2 or pool cleaning robot is positioned below the pool waterline, the probing signal is periodically transmitted at preset intervals. In this way, the pool waterline can be continuously detected while power consumption is reduced.

According to different specific types of the detection unit 22, different types of probing signals may be transmitted. For example, when the detection unit 22 is the sensor such as the infrared sensor or laser sensor, an electromagnetic wave probing signal such as infrared ray or laser light may be transmitted. When the detection unit 22 is the ultrasonic sensor, a mechanical wave probing signal such as ultrasonic wave may be transmitted.

In Step 402, a reflected signal reflected after the probing signal comes into contact with the waterline is received.

The waterline refers to the pool waterline or the container waterline.

After the probing signal transmitted by the transmitting terminal is reflected back, it is received by the receiving terminal. It should be noted that for different positional relationships between the pool waterline detection apparatus 2 or pool cleaning robot and the pool waterline, the reflected signal is reflected back by different waterlines.

Specifically, when the pool waterline detection apparatus 2 or pool cleaning robot is positioned below the pool waterline, the probing signal continues to propagate upwards after passing through the water in the auxiliary container 21, until it reaches the pool waterline and is partially reflected as the reflected signal, which is received by the receiving terminal of the detection unit 22.

When the pool waterline detection apparatus 2 or pool cleaning robot is positioned above the pool waterline, the auxiliary container 21 emerges from the water surface. In this case, the probing signal only passes through the water in the auxiliary container 21. After reaching the container waterline, the probing signal is partially reflected as the reflected signal, which is received by the receiving terminal of the detection unit 22.

In Step 403, the time difference between receiving the reflected signal and transmitting the probing signal is determined.

Time of transmitting the probing signal and time of receiving the reflected signal are recorded, respectively, and the time difference between receiving the reflected signal and transmitting the probing signal is calculated out.

In Step 404, the relative position between the pool waterline detection apparatus or pool cleaning robot and the pool waterline is determined on the basis of the time difference.

In the above technical solutions, because the relative positions between the pool waterline detection apparatus 2 or pool cleaning robot and the pool waterline are different, the time difference between the reflected signal reflected by the pool waterline or container waterline detected by the detection unit 22 and the probing signal changes accordingly. Therefore, the relative position between the pool waterline detection apparatus 2 or pool cleaning robot and the pool waterline may be determined on the basis of the time difference between receiving the reflected signal and transmitting the probing signal.

In some embodiments, a distance between the pool waterline detection apparatus 2 or pool cleaning robot and the pool waterline may be determined on the basis of the time difference, propagation speed of the probing signal in the water, real-time movement speed of the pool waterline detection apparatus 2 or pool cleaning robot, etc. Next, the relative position between the pool waterline detection apparatus 2 or pool cleaning robot and the pool waterline may be determined on the basis of the distance. For example, by multiplying the time difference by the propagation speed of the probing signal in the water, a travel path of the probing signal may be determined; and by multiplying the time difference by travel speed of the pool waterline detection apparatus 2 or pool cleaning robot, the travel path of the pool waterline detection apparatus 2 or pool cleaning robot may be determined. Sum of the travel path of the probing signal and the travel path of the pool waterline detection apparatus 2 or pool cleaning robot is divided by 2 to obtain the distance between the detection unit 22, the pool waterline detection apparatus 2 or pool cleaning robot and the pool waterline. The relative position between the pool waterline detection apparatus 2 or pool cleaning robot and the pool water level may be determined on the basis of the distance. In another possible implementation, the relative position between the pool waterline detection apparatus 2 or pool cleaning robot and the pool waterline may also be determined directly on the basis of the time difference. This implementation will be described in detail below.

FIG. 5 is a flowchart of another pool waterline detection method provided in an embodiment of the present disclosure. Referring to FIG. 5, the present disclosure also provides a pool waterline detection method. By taking an example where an execution body is a robot controller, the method includes following steps.

In Step 501, a probing signal is transmitted to the opening of the auxiliary container.

In Step 502, a reflected signal reflected after the probing signal comes into contact with the waterline is received.

The waterline refers to the pool waterline or the container waterline.

In Step 503, the time difference between receiving the reflected signal and transmitting the probing signal is determined.

The Steps 501, 502 and 503 in this embodiment of the present disclosure belong to the same inventive concept as the Steps 401, 402 and 403 in the above embodiment, and thus are not to be described in detail here.

In Step 504, when the time difference is equal to or less than a preset time difference, the pool waterline detection apparatus or pool cleaning robot reaches the pool waterline.

When the pool waterline detection apparatus 2 or pool cleaning robot partially emerges from the water surface, that is, when the auxiliary container 21 is positioned above the pool waterline, the probing signal transmitted by the detection unit 22 reaches the container waterline and then is reflected back. The relative position between the auxiliary container 21 and the detection unit 22 is fixed, that is, the relative position between the container waterline and the detection unit 22 is also fixed (shaking of the container waterline after the pool waterline detection apparatus 2 or pool cleaning robot comes out of the water is ignored). The time difference between receiving the reflected signal and transmitting the probing signal is a fixed time difference. Therefore, on the basis of the time difference, it may be determined that the pool waterline detection apparatus 2 or pool cleaning robot emerges from the water surface, that is, the pool waterline detection apparatus 2 or pool cleaning robot reaches the pool waterline.

It may be understood that the fixed time difference may fluctuate within a certain range due to shaking of the container water level caused by unstable movement of the pool waterline detection apparatus 2 or pool cleaning robot and detection errors. Therefore, in the embodiments of the present disclosure, the preset time difference may be an interval value including the fixed time difference. For example, when the fixed time difference is 2, the preset time difference is any numeric in an interval [1, 3]. That is, when the time difference is any numeric in the interval [1,3], the pool waterline detection apparatus 2 or pool cleaning robot reaches the pool waterline. Considering that the pool waterline detection apparatus 2 or pool cleaning robot may experience severe shaking after breaking the surface of water, which may spill the water from the auxiliary container, causing a decrease in the container waterline. In this special case, when the time difference is less than the preset time difference, it may also be considered that the pool waterline detection apparatus or pool cleaning robot has reached the pool waterline.

In addition, when the auxiliary container 21 is positioned above the pool waterline, the relative position between the container waterline and the detection unit 22 is always fixed. When the determined time difference is abnormal, verification may be made by transmitting the probing signal for many times, to ensure reliability in detection of the pool waterline.

In Step 505, when the time difference is greater than the preset time difference, the pool waterline detection apparatus or pool cleaning robot is positioned below the pool waterline.

When the pool waterline detection apparatus 2 or pool cleaning robot is totally submerged into the water, that is, when the auxiliary container 21 is positioned below the pool waterline, the probing signal transmitted by the detection unit 22 reaches the pool waterline and is reflected back. At this moment, the distance between the pool waterline and the detection unit 22 is greater than the distance between the container waterline and the detection unit 22, and may increase or decrease as the pool waterline detection apparatus 2 or pool cleaning robot moves close to or away from the pool waterline. Therefore, on the basis of this time difference, it may be determined that the pool waterline detection apparatus 2 or pool cleaning robot has dived into the water surface. That is, when the time difference is greater than the preset time difference, the pool waterline detection apparatus 2 or pool cleaning robot is positioned below the pool waterline.

It should be noted that there are a variety of ways to determine the relative position between the pool waterline detection apparatus or pool cleaning robot and the pool waterline on the basis of the time difference. In another possible implementation, the relative position between the container waterline and the detection unit 22 is fixed after the pool waterline detection device 2 or pool cleaning robot partially emerges from the water surface. Therefore, the probing signal may be continuously transmitted for many times, and the position of the pool waterline detection apparatus or pool cleaning robot may be determined on the basis of a plurality of time differences determined for many times.

Specifically, when the target time difference is less than or equal to the plurality of time differences determined within a predetermined time period after the target time difference, the pool waterline detection apparatus or pool cleaning robot is determined to have reached the pool waterline or to be positioned below the pool waterline. The target time difference is a minimum time difference among the plurality of time differences determined for many times in succession.

A time interval for transmitting the probing signal for many times and a length of the predetermined time period may be determined on the basis of empirical values or repeated experiments.

In this solution, based on a minimum target time difference among the plurality of time differences determined for many times in succession, when the plurality of time differences determined over a longer period of time are all greater than or equal to this target time difference, that is, when the target time difference has not been updated for a longer time, it may be determined that the pool waterline detection apparatus or pool cleaning robot has reached the pool waterline when the pool waterline detection apparatus or pool cleaning robot moves towards the pool waterline; or it may be determined that the pool waterline detection apparatus or pool cleaning robot is positioned below the pool waterline when the pool waterline detection apparatus or pool cleaning robot moves away from the pool waterline.

In the above technical solution, based on a corresponding relationship between the time difference between receiving the reflected signal and transmitting the probing signal and the relative position between the pool waterline detection apparatus 2 or pool cleaning robot and the pool waterline, it can be quickly and accurately determined whether the pool waterline detection apparatus 2 or pool cleaning robot has reached the pool waterline and whether it is positioned below the pool waterline.

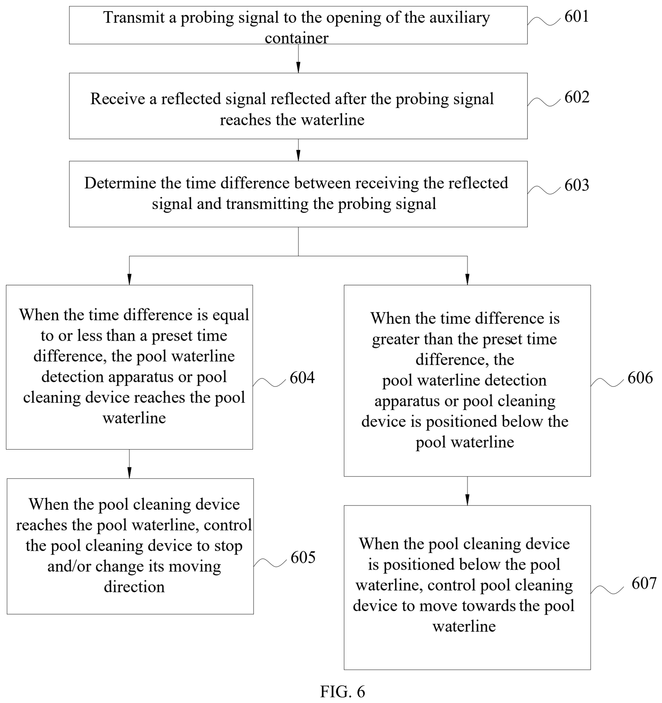

FIG. 6 is a flowchart of another control method for a pool cleaning robot provided in an embodiment of the present disclosure. Referring to FIG. 6, the present disclosure also provides a control method for a pool cleaning robot. By taking an example where the execution body is the robot controller, the method includes following steps.

In Step 601, a probing signal is transmitted to the opening of the auxiliary container.

In Step 602, a reflected signal reflected after the probing signal comes into contact with the waterline is received.

The waterline refers to the pool waterline or the container waterline.

In Step 603, the time difference between receiving the reflected signal and transmitting the probing signal is determined.

In Step 604, when the time difference is equal to or less than the preset time difference, the pool cleaning robot reaches the pool waterline.

The Steps 601, 602, 603 and 604 belong to the same inventive concept as the Steps 501, 502, 503 and 504 in the above embodiment, and thus are not to be described in detail here.

In Step 605, when the pool cleaning robot reaches the pool waterline, the pool cleaning robot is controlled to stop and/or change its moving direction.

It should be noted that when the pool cleaning robot reaches the pool waterline, it is required to timely control the pool cleaning robot to stop climbing upwards. Otherwise, after the pool cleaning robot emerges from the water surface at a certain height, it is easy to cause the pool cleaning robot to fall. Because the water pump of the pool cleaning robot cannot pump the water through the water inlet of the belly 112 and discharge the water from the back 111, it is unable to obtain the pressure tightly pressing the pool cleaning robot against the pool wall through the pressure difference between the water inlet and the water outlet. The pool cleaning robot may be controlled to stop at the pool waterline when countdown ends or other conditions are met, to facilitate recycling of the pool cleaning robot. Regarding controlling the pool cleaning robot to change its moving direction, specifically, the pool cleaning robot may be controlled to move along a vertical downward direction, move along a direction at a certain tilt angle (such as 10°, 30° or 45°) with respect to the vertical downward direction, or move along a direction opposite to the original moving direction.

When the pool cleaning robot reaches the pool waterline, controlling the pool cleaning robot to stop and/or change its moving direction can ensure that the pool cleaning robot always tightly presses against the pool wall, thereby achieving cleaning of the pool waterline.

In Step 606, when the time difference is greater than the preset time difference, the pool cleaning robot is positioned below the pool waterline.

The Step 606 belongs to the same inventive concept as the Step 505 in the above embodiment, and thus is not to be described in detail here.

In Step 607, when the pool cleaning robot is positioned below the pool waterline, the pool cleaning robot is controlled to move towards the pool waterline.

It is to be understood that there are a variety of ways to control the pool cleaning robot to move towards the pool waterline. In some embodiments, to improve efficiency of cleaning the pool waterline, when the pool cleaning robot is positioned below the pool waterline and is farther away from the pool waterline, the pool cleaning robot may be controlled to acceleratedly move towards the pool waterline. When the pool cleaning robot moves closer to the pool waterline, the pool cleaning robot may be controlled to slow down or move at a constant speed towards the pool waterline.

In the above technical solution, on the basis of the relative position between the pool cleaning robot and the pool waterline, the pool cleaning robot can be easily controlled to move near the pool waterline, thereby effectively achieving the cleaning of the pool waterline.

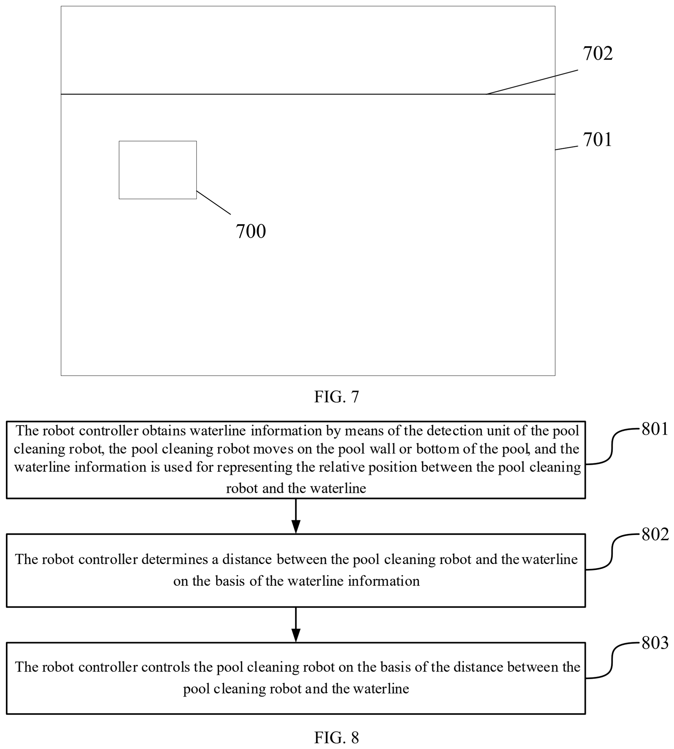

The method for obtaining waterline information provided in the embodiments of the present disclosure is described below. The method for obtaining waterline information provided in the embodiments of the present disclosure may be applied in the scenario of controlling the pool cleaning robot to clean a pool wall of a pool. As shown in FIG. 7, a pool cleaning robot 700 has a wall-climbing function and can adhere to a pool wall 701 of a pool. The pool cleaning robot 700 can move on the pool wall 701 of the pool under the control of the robot controller. For example, the pool cleaning robot 700 can move upwards along the pool wall 701 of the pool, can move downwards along the pool wall 701 of the pool, can move left or right along the pool wall 701 of the pool, and also can rotate on the pool wall 701 of the pool. The embodiments of the present disclosure do not impose limits on motion modes of the pool cleaning robot moving on the pool wall 701. In the embodiments of the present disclosure, the pool cleaning robot 700 is positioned below a waterline 702 of the pool.

Alternatively, the pool cleaning robot may also be positioned at a bottom of the pool to clean the bottom of the pool. The embodiments of the present disclosure do not impose limits on the position of the pool cleaning robot.

The technical solutions provided in the embodiments of the present disclosure are described below. FIG. 8 is a flowchart of a method for obtaining waterline information provided in an embodiment of the present disclosure. Referring to FIG. 8, by taking an example where the execution body is the robot controller, the method includes following steps.

In Step 801, the robot controller obtains waterline information by means of the detection unit of the pool cleaning robot. The pool cleaning robot moves on the pool wall or bottom of the pool, and the waterline information is used for representing the relative position between the pool cleaning robot and the waterline.

For example, when the pool cleaning robot moves on the pool wall, the pool cleaning robot adheres to the pool wall of the pool and can move on the pool wall of the pool. The pool cleaning robot is provided with the detection unit, which is used for collecting information related to the waterline of the pool. The robot controller can obtain waterline information by means of the detection unit, and the waterline information can reflect the relative position between the pool cleaning robot and the waterline. According to its type, the detection unit may be mounted at different positions of the pool cleaning robot, which is not to be described in detail here. The pool cleaning robot is positioned below the waterline of the pool, which means that the pool cleaning robot is in a liquid in the pool.

In Step 802, the robot controller determines a distance between the pool cleaning robot and the waterline on the basis of the waterline information.

Because the waterline information can represent the relative position between the pool cleaning robot and the waterline, the robot controller can further determine the distance between the pool cleaning robot and the waterline on the basis of the waterline information.

In Step 803, the robot controller controls the pool cleaning robot on the basis of the distance between the pool cleaning robot and the waterline.

The bottom of the pool cleaning robot is provided with a travel unit. By driving the travel unit, the robot controller can control the pool cleaning robot to move or rotate on the pool wall of the pool. In Step 803, the robot controller can control the pool cleaning robot by means of the travel unit. Controlling the pool cleaning robot includes controlling the pool cleaning robot to move to the waterline and controlling the pool cleaning robot to move to a target position above or below the waterline.

In some embodiments, the bottom of the pool cleaning robot is also provided with a cleaning unit, which can clean the pool wall of the pool. In some embodiments, the cleaning unit comprises a roller brush, and the pool wall can be cleaned by rotation of the roller brush. Alternatively, when the cleaning unit does not include the roller brush, the pool cleaning robot filters pool water by means of an internal driving apparatus and a filtering apparatus and then discharges the filtered pool water, thereby cleaning the pool wall. Of course, the cleaning unit may also include both the roller brush and a water ejection nozzle, but the embodiments of the present disclosure are not limited thereto.

In addition, the cleaning function of the pool cleaning robot may be activated or not activated during its movement. Activating the cleaning function of the pool cleaning robot during its movement refers to a fact that the pool cleaning robot can activate the cleaning function during its movement, thereby achieving cleaning of a position where the pool cleaning robot passes through on the pool wall.

Through the technical solutions provided in the embodiments of the present disclosure, waterline information is obtained by means of the detection unit of the pool cleaning robot, where the waterline information can indicate how far it is from the pool cleaning robot to the waterline of the pool. The distance between the pool cleaning robot and the waterline can be determined on the basis of the waterline information. The pool cleaning robot can be controlled on the basis of the distance between the pool cleaning robot and the waterline, that is, the pool cleaning robot is further controlled with reference to the waterline, thereby achieving recognition of the waterline.

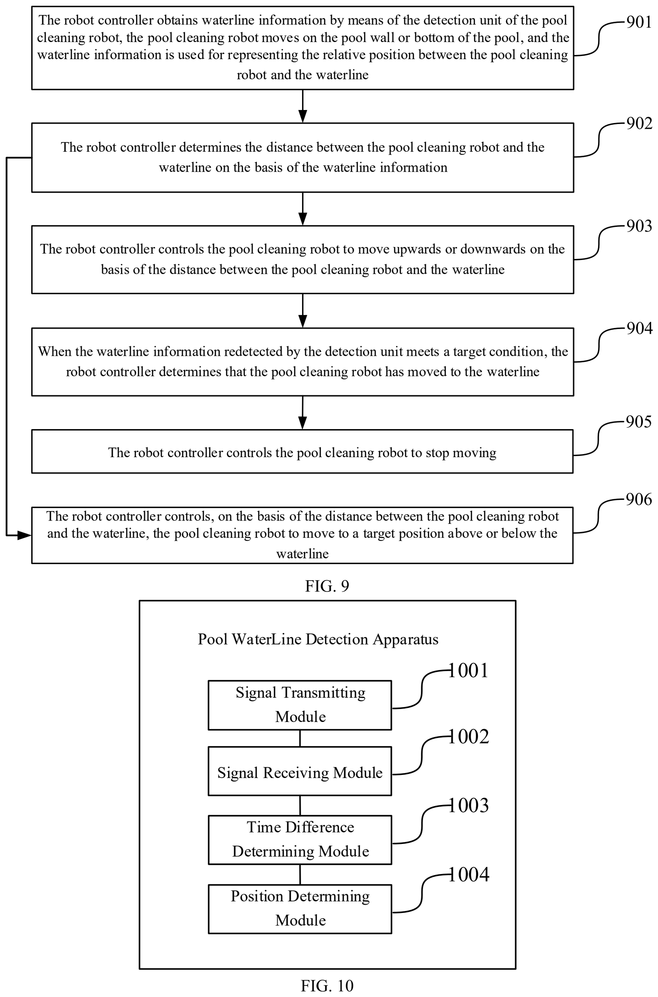

It should be noted that the above Steps 801 to 803 serve as a brief introduction to the technical solutions provided by the embodiments of the present disclosure. Below, a more detailed explanation of the technical solutions provided by the embodiments of the present disclosure will be made below in conjunction with some examples. Referring to FIG. 9, by taking an example where the execution body is the robot controller, the method includes following steps.

In Step 901, the robot controller obtains waterline information by means of the detection unit of the pool cleaning robot. The pool cleaning robot moves on the pool wall or bottom of the pool, and the waterline information is used for representing the relative position between the pool cleaning robot and the waterline.

For example, when the pool cleaning robot moves on the pool wall, the pool cleaning robot adheres to the pool wall of the pool and can move on the pool wall of the pool. The pool cleaning robot is provided with the detection unit, which is used for collecting information related to the waterline of the pool. The robot controller can obtain waterline information by means of the detection unit, where the waterline information can reflect the relative position between the pool cleaning robot and the waterline. In some embodiments, the detection unit is also referred to as a waterline detection sensor. According to its type, the detection unit may be mounted at different positions of the pool cleaning robot, which is not to be described in detail here. The pool cleaning robot is positioned below the waterline of the pool, which means that the pool cleaning robot is in a liquid in the pool.

The above implementations will be described below taking examples where the detection unit is different sensors. First of all, a description is made by taking an example where the detection unit is a distance sensor.

In some embodiments, the robot controller obtains the waterline information by means of the distance sensor of the pool cleaning robot.

The distance sensor is mounted in a front or upper side of the pool cleaning robot, where the front refers to a side wall in the forward direction of the pool cleaning robot, and the upper side refers to top of the pool cleaning robot. Of course, in other possible implementations, the distance sensor may also be mounted in other positions of the pool cleaning robot, but the embodiments of the present disclosure are not limited thereto.

In this implementation, the robot can directly obtain the distance between the pool cleaning robot and the waterline by means of the distance sensor, such that the robot controller can control the pool cleaning robot on the basis of the distance subsequently. Effects of distance-based control are more intuitive and more accurate.

As the name suggests, the distance sensor is used to measure a distance. In the embodiments of the present disclosure, the distance sensor is used to measure the distance between the pool cleaning robot and the waterline of the pool. The distance between the pool cleaning robot and the waterline of the pool is the waterline information. The distance sensor includes two types, where the first type of distance sensor is a sensor that determines the distance on the basis of propagation speed and propagation time of waves in the water, and the second type of distance sensor is a sensor that determines the distance on the basis of images. Descriptions will be made below by taking examples where the distance sensor include the two types of sensors.

In Example I, the robot controller sends the probing signal to the upper side or lower side of the pool cleaning robot by means of the distance sensor, that is, the probing signal is transmitted to the opening of the auxiliary container. The robot controller receives a reflected signal corresponding to the probing signal, where the reflected signal is part of the probing signal reflected after the probing signal comes into contact with the waterline. The robot controller determines the waterline information on the basis of the probing signal and the reflected signal. The waterline information includes propagation speed of the probing signal in the water, and any one of a time difference between sending the probing signal and receiving the reflected signal, a phase difference between the probing signal and the reflected signal, and an angle difference between the probing signal and the reflected signal.

As the first type of sensor, the distance sensor is any one of an optical distance sensor (infrared sensor or laser sensor), an acoustic distance sensor, and a radar. Correspondingly, the probing signal is at least one of a light wave (infrared light or laser light), a sound wave (ultrasonic wave), and a radar signal. Of course, in other possible implementations, the distance sensor may also be other types of Time of Flight (TOF) sensors, but the embodiments of the present disclosure are not limited thereto. Whether the distance sensor sends the probing signal to the upper side or lower side of the pool cleaning robot depends on whether the pool cleaning robot is positioned above or below the waterline. When the pool cleaning robot is positioned below the waterline, the distance sensor sends the probing signal to the upper side of the pool cleaning robot. When the pool cleaning robot is positioned above the waterline, the distance sensor sends the probing signal to the lower side of the pool cleaning robot. In some embodiments, determining whether the pool cleaning robot is positioned above or below the waterline may be achieved by determining whether the pool cleaning robot is positioned in the water. When the pool cleaning robot is positioned in the water, the pool cleaning robot is positioned below the waterline; and when the pool cleaning robot is positioned outside the water, the pool cleaning robot is positioned above the waterline.

In some embodiments, taking an example where the pool cleaning robot is positioned below the waterline, the robot controller adjusts the orientation of the pool cleaning robot, such that the signal transmission direction of the distance sensor on the pool cleaning robot becomes upward along the pool wall. The robot controller sends a probing signal sending instruction to the distance sensor, where the probing signal sending instruction is used for instructing the distance sensor to send the probing signal. Alternatively, when the signal transmission direction of the distance sensor can be adjusted, the robot controller can also send a direction adjustment instruction to the distance sensor, where the direction adjustment instruction is used for instructing the distance sensor to adjust the sending direction of the probing signal to be upward along the pool wall. When the distance sensor adjusts the sending direction of the probing signal to be upward along the pool wall, the robot controller sends a probing signal sending instruction to the distance sensor, where the probing signal sending instruction is used for instructing the distance sensor to send the probing signal. The distance sensor receives the probing signal sending instruction, and sends the probing signal in response to the probing signal sending command. The distance sensor receives the reflected signal corresponding to the probing signal, where the reflected signal is the part of the probing signal reflected after the probing signal comes into contact with the waterline. Principles of generating the reflected signal are as below. When the probing signal reaches the waterline, which serves as a boundary between liquid and gas, part of the probing signal may be refracted and other part of the probing signal may be reflected, and the reflected signal is the part of the probing signal reflected. The robot controller determines the waterline information on the basis of the probing signal and the reflected signal. The waterline information includes the propagation speed of the probing signal in the water, and any one of the time difference between sending the probing signal and receiving the reflected signal, the phase difference between the probing signal and the reflected signal, and the angle difference between the probing signal and the reflected signal.

In Example II, the robot controller collects an image of the upper side or lower side of the pool cleaning robot by means of the distance sensor. The robot controller performs image recognition on the image to obtain the waterline information, which includes a position of the waterline in the image.

As the second type of sensor, the distance sensor may be a monocular camera or binocular camera, but the embodiments of the present disclosure are not limited thereto. Similarly to the Example I, whether to collect the image of the upper side or lower side of the pool cleaning robot depends on a fact whether the pool cleaning robot is positioned above or below the waterline.

In some embodiments, taking an example where the pool cleaning robot is positioned below the waterline, the robot controller adjusts the orientation of the pool cleaning robot, such that the image collection direction of the distance sensor on the pool cleaning robot becomes upward along the pool wall. The robot controller sends an image collection instruction to the distance sensor, where the image collection instruction is used for instructing the distance sensor to collect the image. Alternatively, when the image collection direction of the distance sensor can be adjusted, the robot controller can also send a direction adjustment instruction to the distance sensor, where the direction adjustment instruction is used for instructing the distance sensor to adjust the image collection direction to be upward along the pool wall. When the distance sensor adjusts the image collection direction to be upward along the pool wall, the robot controller sends an image collection instruction to the distance sensor, where the image collection instruction is used for instructing the distance sensor to collect the image. When the distance sensor is the monocular camera, the robot controller determines the distance between the pool cleaning robot and the waterline by performing coordinate transformation on the position of the waterline in the image by means of a principle of pinhole imaging. A method of performing coordinate transformation on the position of the waterline in the image by means of the principle of pinhole imaging includes: transforming pixel coordinates of the waterline in the image into camera coordinates in a camera coordinate system, and then transforming the camera coordinates into world coordinates. The world coordinates of the waterline can represent the position of the waterline, and the world coordinates of the waterline constitute the waterline information. The above coordinate transformation process depends on calibration of the monocular camera, which may be completed by technical personnel in advance. When the distance sensor is the binocular camera, the distance sensor can capture two images of the waterline at the same moment but at different angles. On the basis of the relative position between the two images and two webcams of the binocular camera, the robot sensor can determine the position of the waterline, i.e. the waterline information.

After the description is made by taking an example where the detection unit is the distance sensor, a description is made below by taking an example where the detection unit is the liquid depth sensor.

In some embodiments, the robot controller obtains the waterline information by means of the liquid depth sensor of the pool cleaning robot.

The liquid depth sensor may be mounted at any position on the pool cleaning robot, but the embodiments of the present disclosure are not limited thereto.

In this implementation, the robot controller can obtain depth of the pool cleaning robot in the liquid by means of the liquid depth sensor, and the obtained waterline information can represent the depth of the pool cleaning robot in the liquid. Subsequently, the pool cleaning robot may be controlled on the basis of the depth of the pool cleaning robot in the liquid.

For example, the robot controller collects pressure around the pool cleaning robot by means of the liquid depth sensor. The robot controller determines the waterline information on the basis of the pressure around the pool cleaning robot, where the waterline information includes the depth of the pool cleaning robot in the pool. The pressure around the pool cleaning robot may be either water pressure or sum of the water pressure and atmospheric pressure, but the embodiments of the present disclosure are not limited thereto. A principle of collecting the pressure around the pool cleaning robot by the liquid depth sensor is as below: the liquid depth sensor can convert the pressure into an electrical signal, based on which the pressure can be inferred. A principle of determining the depth on the basis of the pressure is as below: the pressure applied on an object in the liquid is positively correlated with the depth of the object in the liquid, the deeper the object in the liquid, the greater the pressure applied on the object. According to a pressure formula, p=ρgh, where p represents the pressure, ρ represents density of the liquid, g represents gravitational acceleration, and h represents the depth. There also exists a relationship between force and pressure, f=ps, where f represents the force, p represents the pressure, and s represents area of thrust surface (area of the liquid depth sensor, a known quantity). By measuring the force, the depth can be inferred.

After the description is made by taking the example where the detection unit is the liquid depth sensor, a description is made below by taking an example where the detection unit is a signal receiving sensor.

In some embodiments, the robot controller obtains the waterline information by means of the signal receiving sensor of the pool cleaning robot.

The signal receiving sensor is configured to receive a target signal having a specific frequency, where the frequency of the target signal is set by technical personnel according to actual situations, but the embodiments of the present disclosure are not limited thereto. The signal receiving sensor may be mounted at any position on the pool cleaning robot, but the embodiments of the present disclosure are not limited thereto.

For example, the robot controller receives the target signal by means of the signal receiving sensor, where signal strength of the target signal is negatively correlated with the depth of the pool cleaning robot in the pool. The robot controller determines the waterline information on the basis of the target signal, where the waterline information includes the signal strength of the target signal. An apparatus for sending the target signal is positioned above the pool. The signal strength of the target signal is negatively correlated with the depth of the pool cleaning robot in the pool, which means a fact that the deeper the pool cleaning robot is in the pool, the weaker the signal strength of the target signal received by the signal receiving sensor is; the shallower the pool cleaning robot is in the pool, the higher the signal strength of the target signal received by the signal receiving sensor is. The depth of the pool cleaning robot in the liquid can be inferred on the basis of the strength of the target signal. In some embodiments, the signal strength of the target signal may likely become zero after the pool cleaning robot enters the liquid.

In Step 902, the robot controller determines the distance between the pool cleaning robot and the waterline on the basis of the waterline information.

Because the waterline information can represent the relative position between the pool cleaning robot and the waterline, the robot controller can further determine the distance between the pool cleaning robot and the waterline on the basis of the waterline information.

In some embodiments, when the detection unit is the distance sensor, the robot controller determines the distance between the pool cleaning robot and the waterline on the basis of any one of the time difference between sending the probing signal and receiving the reflected signal, the phase difference between the probing signal and the reflected signal, and the angle difference between the probing signal and the reflected signal, and the propagation speed of the probing signal in the water.

The above implementation is described below using three examples.

Example I: when the detection unit is the distance sensor, the robot controller determines the distance between the pool cleaning robot and the waterline on the basis of the time difference between sending the probing signal and receiving the reflected signal, and the propagation speed of the probing signal in the water.

For example, when the detection unit is the distance sensor, an apparatus for transmitting the probing signal and an apparatus for receiving the reflected signal of the distance sensor are arranged side by side and adjacent to each other. The robot controller obtains the distance between the pool cleaning robot and the waterline by multiplying the time difference by the propagation speed and then dividing the product by two.

Example II: when the detection unit is the distance sensor, the robot controller determines the distance between the pool cleaning robot and the waterline on the basis of the phase difference between the probing signal and the reflected signal, and the propagation speed of the probing signal in the water.

For example, when the detection unit is the distance sensor, the apparatus for transmitting the probing signal and the apparatus for receiving the reflected signal of the distance sensor are arranged side by side and adjacent to each other. The robot controller determines the time difference between sending the probing signal and receiving the reflected signal on the basis of the phase difference between the probing signal and the reflected signal, and the angular frequency of the probing signal. The robot controller obtains the distance between the pool cleaning robot and the waterline by multiplying the time difference by the propagation speed and then dividing the product by two.

Example III: when the detection unit is the distance sensor, the robot controller determines the distance between the pool cleaning robot and the waterline on the basis of the angle difference between the probing signal and the reflected signal, and the propagation speed of the probing signal in the water.

For example, when the detection unit is the distance sensor, the apparatus for transmitting the probing signal and the apparatus for receiving the reflected signal of the distance sensor are arranged side by side and spaced apart at a certain distance. The apparatus for transmitting the probing signal is a laser radar, and the apparatus for receiving the reflected signal is a webcam. A certain angle is formed between the laser light transmitted by the laser radar and the waterline. The apparatus for transmitting the probing signal, the apparatus for receiving the reflected signal, and a probe point on the waterline constitute one triangle. The robot controller determines the distance between the pool cleaning robot and the waterline on the basis of a principle of triangulation ranging, the angle difference, and the propagation speed of the probing signal in the water.

In some embodiments, when the detection unit is the liquid depth sensor, the robot controller determines the distance between the pool cleaning robot and the waterline on the basis of the depth of the pool cleaning robot in the pool.

The depth of the pool cleaning robot in the pool is the distance between the pool cleaning robot and the waterline.

In some embodiments, when the detection unit is the signal receiving sensor, the robot controller determines the distance between the pool cleaning robot and the waterline on the basis of the signal strength of the target signal.

For example, when the detection unit is the signal receiving sensor, the robot controller determines the depth of the pool cleaning robot in the pool on the basis of the signal strength of the target signal. The robot controller determines the distance between the pool cleaning robot and the waterline on the basis of the depth of the pool cleaning robot in the pool.

Because the signal strength of the target signal is negatively correlated with the depth of the pool cleaning robot in the pool, the depth of the pool cleaning robot in the pool can be inferred on the basis of the signal strength of the target signal, and then the distance between the pool cleaning robot and the waterline is determined.

Alternatively, in some embodiments, the signal receiving sensor is unable to receive the target signal under the water. When the signal receiving sensor is unable to receive the target signal, it is determined that the pool cleaning robot is positioned below the waterline, and subsequently the pool cleaning robot can be controlled to move upwards. When the pool cleaning robot reaches the waterline, the signal receiving sensor can receive the target signal.

Optionally, after the Step 902, the robot controller can perform both Steps 903 to 905 and Step 906, but the embodiments of the present disclosure are not limited thereto.

In the Step 903, the robot controller controls the pool cleaning robot to move upwards or downwards on the basis of the distance between the pool cleaning robot and the waterline.

The bottom of the pool cleaning robot is provided with a travel unit. By driving the travel unit, the robot controller can control the pool cleaning robot to move or rotate on the pool wall of the pool. In the Step 903, the robot controller can control the pool cleaning robot to move to the waterline by means of the travel unit. In some embodiments, the pool cleaning robot also includes a drive unit, which is connected to the robot controller and the travel unit. The drive unit is controlled by the robot controller, and the drive unit can provide power to the travel unit, such that the pool cleaning robot can move or rotate on the pool wall of the pool by means of the travel unit. In some embodiments, the travel unit is a universal wheel. During the movement of the pool cleaning robot, the pool cleaning robot always stays on the pool wall of the pool. Controlling the pool cleaning robot to move upwards or downwards depends on a fact whether the pool cleaning robot is positioned above or below the waterline. When the pool cleaning robot is positioned above the waterline, the pool cleaning robot is controlled to move downwards. When the pool cleaning robot is positioned below the waterline, the pool cleaning robot is controlled to move upwards.

In some embodiments, the pool cleaning robot is powered by an external power source. In this way, it may be ensured that the pool cleaning robot can complete a task such as cleaning the pool, in a scene with a larger area. Alternatively, the pool cleaning robot is powered by a built-in battery, freeing it from limitations of connecting wires. Thus, the pool cleaning robot can perform the cleaning task in a larger area. Alternatively, the pool cleaning robot is powered by a solar panel to reduce energy costs in using it for cleaning. The embodiments of the present disclosure do not impose limits on power supply modes of the pool cleaning robot. In some embodiments, the pool cleaning robot also includes a gyroscope, which can determine a direction of the pool cleaning robot.

In some embodiments, the bottom of the pool cleaning robot is also provided with a cleaning unit, which can clean the pool wall of the pool. In some embodiments, the cleaning unit comprises a roller brush, and the pool wall can be cleaned by rotation of the roller brush. Alternatively, when the cleaning unit does not include the roller brush, the pool cleaning robot filters pool water by means of an internal driving apparatus and a filtering apparatus and then discharges the filtered pool water, thereby cleaning the pool wall. Of course, the cleaning unit may also include both the roller brush and a water ejection nozzle, but the embodiments of the present disclosure are not limited thereto.

In addition, the cleaning function of the pool cleaning robot may be activated or not activated during its movement. Activating the cleaning function of the pool cleaning robot during its movement refers to a fact that the pool cleaning robot can activate the cleaning function during its movement, thereby achieving cleaning of a position where the pool cleaning robot passes through on the pool wall.

In some embodiments, the robot controller performs path planning on the basis of the distance between the pool cleaning robot and the waterline to obtain a target path. The robot controller controls, on the basis of the target path, the pool cleaning robot to move upwards or downwards.

For example, the robot controller performs the path planning on the basis of the distance between the pool cleaning robot and the waterline to obtain the target path. The robot controller determines the direction of the pool cleaning robot by means of the gyroscope. The robot controller sends, on the basis of the direction of the pool cleaning robot, a drive instruction to the drive unit of the pool cleaning robot. The drive instruction is used for instructing the drive unit to drive the travel unit of the pool cleaning robot, such that the pool cleaning robot moves upwards along the pool wall according to the target path. In response to the drive instruction, the drive unit of the pool cleaning robot controls the pool cleaning robot to move.

In some embodiments, when the pool cleaning robot detects an obstacle, the robot controller controls the pool cleaning robot to avoid the obstacle and return to the target path.

In some embodiments, when an obstacle is detected in front of the moving direction of the pool cleaning robot by means of the detection unit, the robot controller sets an obstacle avoidance route for the pool cleaning robot by using algorithms such as a simulated annealing algorithm, an artificial potential field algorithm, a fuzzy logic algorithm, or a tabu search algorithm. The robot controller controls the pool cleaning robot to move along the obstacle avoidance route, thereby avoiding the obstacle. The robot controller controls the pool cleaning robot to return to the target path and continue cleaning after the obstacle is avoided.

In Step 904, when the waterline information redetected by the detection unit meets a target condition, the robot controller determines that the pool cleaning robot has moved to the waterline.

During the movement of the pool cleaning robot, the robot controller may also obtain waterline information by means of the detection unit, such that the robot controller can control the pool cleaning robot. The redetected waterline information is the waterline information detected during the movement of the pool cleaning robot.

In some embodiments, the expression that the waterline information meets the target condition refers to any of following statements.

The redetected waterline information indicates that the distance between the pool cleaning robot and the waterline is less than or equal to a first distance threshold. When the distance between the pool cleaning robot and the waterline is less than or equal to the first distance threshold, this indicates that the distance between the pool cleaning robot and the waterline is small enough, and the pool cleaning robot moves to the waterline. The first distance threshold is set by technical personnel according to the actual situations, but the embodiments of the present disclosure are not limited thereto.

The redetected waterline information indicates that the pressure around the pool cleaning robot is less than or equal to a pressure threshold. The pressure around the pool cleaning robot may decrease continuously as the pool cleaning robot moves upwards. When the pressure around the pool cleaning robot is less than or equal to the pressure threshold, this indicates that the distance between the pool cleaning robot and the waterline is small enough, and the pool cleaning robot moves to the waterline. The pressure threshold is set by the technical personnel according to the actual situations, but the embodiments of the present disclosure are not limited thereto.

The redetected waterline information indicates that a fluctuation range of the pressure around the pool cleaning robot is within a target fluctuation range. The pressure around the pool cleaning robot may decrease continuously as the pool cleaning robot moves upwards. After the pool cleaning robot reaches the waterline, if the pool cleaning robot continues moving upwards, the pressure applied to the pool cleaning robot may be changed from water pressure to air pressure, and change in the pressure is smaller. Therefore, on the basis of the fluctuation range of the pressure, it can be determined that the pool cleaning robot has reached the waterline.

The redetected waterline information indicates that the signal strength of the received target signal is greater than or equal to a signal strength threshold, and the signal strength of the target signal is negatively correlated with the depth of the pool cleaning robot in the pool. The signal strength of the target signal may increase continuously as the pool cleaning robot moves upward. When the signal strength of the target signal is greater than or equal to the signal strength threshold, this indicates that the distance between the pool cleaning robot and the waterline is small enough, and the pool cleaning robot moves to the waterline. The signal strength threshold is set by the technical personnel according to the actual situations, but the embodiments of the present disclosure are not limited thereto.

In Step 905, the robot controller controls the pool cleaning robot to stop moving.

In some embodiments, the robot controller sends a stop instruction to the drive unit of the pool cleaning robot, where the stop instruction is used for instructing the drive unit to stop driving the pool cleaning robot, such that the pool cleaning robot is controlled to stop moving.

A position where the pool cleaning robot remains stationary is on the waterline. Subsequently, the pool cleaning robot can be controlled on the basis of the waterline, which serves as a starting point. For example, the pool cleaning robot is controlled to clean the pool wall along the waterline, but the embodiments of the present disclosure are not limited thereto.

In Step 906, the robot controller controls, on the basis of the distance between the pool cleaning robot and the waterline, the pool cleaning robot to move to a target position above or below the waterline.

The target position is a position where the distance between the pool cleaning robot and the waterline is a target distance, and the target position is set by the technical personnel according to the actual situations, but the embodiments of the present disclosure are not limited thereto.

In some embodiments, the robot controller determines the distance between the pool cleaning robot and the target position on the basis of the distance between the pool cleaning robot and the waterline. The robot controller controls, on the basis of the distance between the pool cleaning robot and the target position, the pool cleaning robot to move upwards or downwards. When the distance between the pool cleaning robot and the target position is less than or equal to a second distance threshold, the robot controller determines that the pool cleaning robot has moved to the target position. The robot controller controls the pool cleaning robot to stop moving. The second distance threshold may be the same as or different from the first distance threshold, and the second distance threshold is set by the technical personnel according to the actual situations, but the embodiments of the present disclosure are not limited thereto.

Optional embodiments of the present disclosure may be formed by arbitrary combination of all the foregoing optional technical solutions, and thus are not to be repeated any more herein.

Through the technical solutions provided in the embodiments of the present disclosure, waterline information is obtained by means of the detection unit of the pool cleaning robot, where the waterline information can indicate how far it is from the pool cleaning robot to the pool waterline. The distance between the pool cleaning robot and the waterline can be determined on the basis of the waterline information. The pool cleaning robot can be controlled on the basis of the distance between the pool cleaning robot and the waterline, that is, the pool cleaning robot is further controlled with reference to the waterline, thereby achieving recognition of the waterline.

FIG. 10 is a schematic structural diagram of a pool waterline detection apparatus provided in an embodiment of the present disclosure. As an example, as shown in FIG. 10, the present disclosure provides a pool waterline detection apparatus, which includes:
a signal transmitting module 1001 configured to transmit a probing signal to the opening of the auxiliary container;
a signal receiving module 1002 configured to receive the reflected signal after the probing signal reaches the waterline, where the waterline is the pool waterline or the container waterline;
a time difference determining module 1003 configured to determine a time difference between receiving the reflected signal and transmitting the probing signal; and
a position determining module 1004 configured to determine a relative position between the pool waterline detection apparatus or pool cleaning robot and the pool waterline on the basis of the time difference.

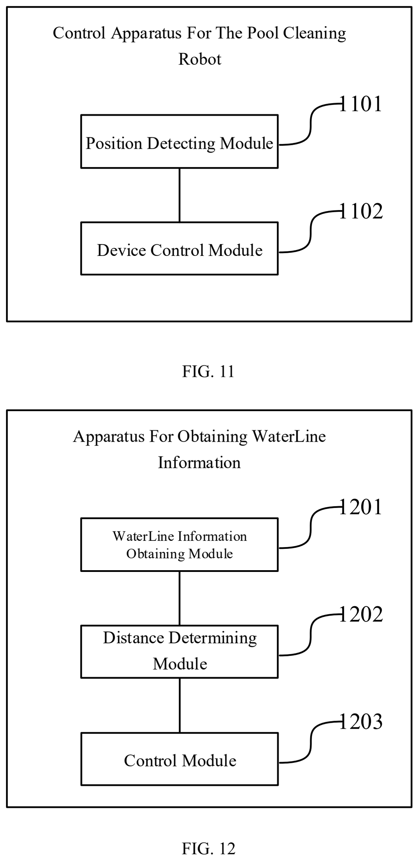

FIG. 11 is a schematic structural diagram of a control apparatus for the pool cleaning robot provided in an embodiment of the present disclosure. As an example, as shown in FIG. 11, the present disclosure provides a control apparatus for the pool cleaning robot, and the control apparatus includes:
a position detecting module 1101 configured to determine a relative position between the pool cleaning robot and the pool waterline using the pool waterline detection method described in any one of the above embodiments; and
a device control module 1102 configured to control the pool cleaning robot to stop and/or reverse its movement when the pool cleaning robot reaches the pool waterline, and control the pool cleaning robot to move towards the pool waterline when the pool cleaning robot is positioned below the pool waterline.

FIG. 12 is a schematic structural diagram of an apparatus for obtaining waterline information provided in an embodiment of the present disclosure. Referring to FIG. 12, the apparatus includes a waterline information obtaining module 1201, a distance determining module 1202, and a control module 1203.

The waterline information obtaining module 1201 is configured to obtain waterline information by means of the detection unit of the pool cleaning robot, where the pool cleaning robot moves on the pool wall or pool bottom of the pool, and the waterline information is used for representing a relative position between the pool cleaning robot and the waterline.

The distance determining module 1202 is configured to determine a distance between the pool cleaning robot and the waterline on the basis of the waterline information.

The control module 1203 is configured to control the pool cleaning robot on the basis of the distance between the pool cleaning robot and the waterline.

In some embodiments, the waterline information obtaining module 1201 is configured to:
obtain the waterline information by means of a distance sensor of the pool cleaning robot;
obtain the waterline information by means of a liquid depth sensor of the pool cleaning robot; and
obtain the waterline information by means of a signal receiving sensor of the pool cleaning robot.

In some embodiments, the waterline information obtaining module 1201 is configured to: send a probing signal to an upper side or a lower side of the pool cleaning robot by means of the distance sensor; receive a reflected signal corresponding to the probing signal, where the reflected signal is part of the probing signal reflected after the probing signal comes into contact with the waterline; and determine the waterline information on the basis of the probing signal and the reflected signal, where the waterline information includes propagation speed of the probing signal in water, and any one of a time difference between sending the probing signal and receiving the reflected signal, a phase difference between the probing signal and the reflected signal, and an angle difference between the probing signal and the reflected signal.

In some embodiments, the distance determining module 1202 is configured to determine the distance between the pool cleaning robot and the waterline on the basis of any one of the time difference between sending the probing signal and receiving the reflected signal, the phase difference between the probing signal and the reflected signal and the angle difference between the probing signal and the reflected signal, and the propagation speed of the probing signal in the water.

In some embodiments, the waterline information obtaining module 1201 is configured to: collect an image of the upper side or the lower side of the pool cleaning robot by means of the distance sensor; and obtain the waterline information by performing image recognition on the image, where the waterline information includes a position of the waterline in the image.

In some embodiments, the distance determining module 1202 is configured to determine the distance between the pool cleaning robot and the waterline by performing coordinate transformation on the position of the waterline in the image by means of a principle of pinhole imaging.

In some embodiments, the waterline information obtaining module 1201 is configured to: collect pressure around the pool cleaning robot by means of the liquid depth sensor; and determine the waterline information on the basis of the pressure around the pool cleaning robot, where the waterline information includes a depth of the pool cleaning robot in the pool.

In some embodiments, the distance determining module 1202 is configured to determine the distance between the pool cleaning robot and the waterline on the basis of the depth of the pool cleaning robot in the pool.

In some embodiments, the waterline information obtaining module 1201 is configured to receive a target signal by means of the signal receiving sensor, where signal strength of the target signal is negatively correlated with the depth of the pool cleaning robot in the pool. The waterline information is determined on the basis of the target signal, and the waterline information includes the signal strength of the target signal.

In some embodiments, the distance determining module 1202 is configured to determine the distance between the pool cleaning robot and the waterline on the basis of the signal strength of the target signal.

In some embodiments, the control module 1203 is configured to:
control the pool cleaning robot to move to the waterline on the basis of the distance between the pool cleaning robot and the waterline; and
control the pool cleaning robot to move to a target position above or below the waterline on the basis of the distance between the pool cleaning robot and the waterline.

In some embodiments, the control module 1203 is configured to control the pool cleaning robot to move upwards or downwards on the basis of the distance between the pool cleaning robot and the waterline.

When the waterline information redetected by the detection unit meets a target condition, it is determined that the pool cleaning robot has moved to the waterline.

The control module 1203 is also configured to control the pool cleaning robot to stop moving.

In some embodiments, the expression that the waterline information redetected by the detection unit meets the target condition refers to:
the redetected waterline information indicating that the distance between the pool cleaning robot and the waterline is less than or equal to a first distance threshold;
the redetected waterline information indicating that the pressure around the pool cleaning robot is less than or equal to a pressure threshold; or
the redetected waterline information indicating that the signal strength of the received target signal is greater than or equal to a signal strength threshold, where the signal strength of the target signal is negatively correlated with the depth of the pool cleaning robot in the pool.

In some embodiments, the control module 1203 is configured to determine the distance between the pool cleaning robot and the target position on the basis of the distance between the pool cleaning robot and the waterline. The pool cleaning robot is controlled to move upwards or downwards on the basis of the distance between the pool cleaning robot and the target position. When the distance between the pool cleaning robot and the target position is less than or equal to a second distance threshold, it is determined that the pool cleaning robot has moved to the target position. The pool cleaning robot is controlled to stop moving.

It should be explained that, when the apparatus for obtaining waterline information provided by the above embodiment obtains the waterline information, division of the above functional modules is described as an example. In actual application, the above functions may be allocated to different functional modules for implementation according to actual needs. That is, the internal structure of the robot controller is divided into different functional modules to accomplish all or part of the functions described as above. In addition, the apparatus for obtaining waterline information and the method for obtaining waterline information provided in the above embodiments are of the same concept, and thus reference is made to the method embodiments for a specific implementation process, which is not to be detailed in detail here.

Through the technical solutions provided in the embodiments of the present disclosure, waterline information is obtained by means of the detection unit of the pool cleaning robot, where the waterline information can indicate how far it is from the pool cleaning robot to the pool waterline. The distance between the pool cleaning robot and the waterline can be determined on the basis of the waterline information. The pool cleaning robot can be controlled on the basis of the distance between the pool cleaning robot and the waterline, that is, the pool cleaning robot is further controlled with reference to the waterline, thereby achieving recognition of the waterline.

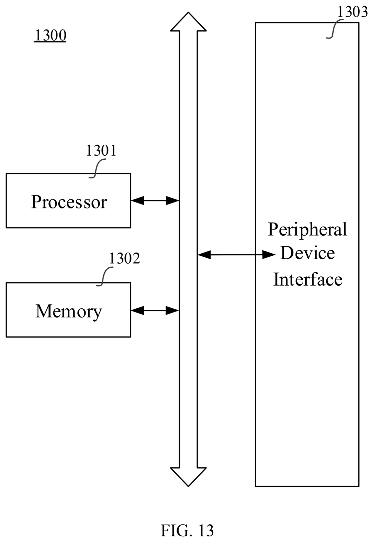

The embodiments of the present disclosure also provide a pool cleaning robot, which includes a robot controller. FIG. 13 is a schematic structural diagram of a robot controller provided in an embodiment of the present disclosure.

Typically, the robot controller 1300 includes one or more processors 1301 and one or more memories 1302.

The processor 1301 may include one or more processing cores, such as a quad-core processor or an octa-core processor. The processor 1301 may be implemented in at least one hardware form from Digital Signal Processing (DSP), Field-Programmable Gate Array (FPGA), and Programmable Logic Array (PLA). The processor 1301 may also include a main processor and a coprocessor. The main processor is a processor used for processing data in an awake state, and is also known as a Central Processing Unit (CPU). The coprocessor is a low power processor used for processing data in a standby state. In some embodiments, the processor 1301 may be integrated with a Graphics Processing Unit (GPU), which is used for rendering and drawing contents required to be displayed on a display screen. In some embodiments, the processor 1301 may also include an AI (Artificial Intelligence) processor for processing computational operations related to machine learning.

The memory 1302 may include one or more computer-readable storage media, which may be non-transient. The memory 1302 may also include a high-speed random access memory, and a non-volatile memory such as one or more disk storage devices or flash storage devices. In some embodiments, the non-transient computer-readable storage medium in the memory 1302 is used for storing at least one computer program for execution by the processor 1301 to implement the pool waterline detection method or the method for obtaining waterline information provided in the method embodiments of the present disclosure.

In some embodiments, the robot controller 1300 may also optionally include a peripheral device interface 1303 and at least one peripheral device. Each peripheral device may be connected to the peripheral device interface 1303 through a bus, signal line, or circuit board.

Those skilled in the art may understand that the structure shown in FIG. 13 does not constitute a limitation on the robot controller 1300, and may include more or fewer components than shown in the figure, or combine some components, or adopt different component arrangements.

In an exemplary embodiment, there is also provided a computer-readable storage medium such as a memory comprising a computer program, where the computer program may be executed by the processor to complete the pool waterline detection method or method for obtaining waterline information in the above embodiments. For example, the computer-readable storage medium may be a Read-Only Memory (ROM), a Random Access Memory (RAM), a Compact Disc Read-Only Memory (CD-ROM), a magnetic tape, a floppy disk, or an optical data storage device.

In an exemplary embodiment, there is also provided a computer program product or computer program comprising program code stored in the computer-readable storage medium. The processor of the robot controller reads the program code from the computer-readable storage medium, and the processor executes the program code, causing the robot controller to perform the pool waterline detection method or method for obtaining waterline information as described above.

In some embodiments, the computer program involved in the embodiments of the present disclosure may be deployed and executed on one robot controller, or executed on a plurality of robot controllers positioned in one location, or executed on a plurality of robot controllers distributed in a plurality of locations and interconnected through a communication network. The plurality of robot controllers distributed in the plurality of locations and interconnected through the communication network may form a blockchain system.

It should be understood for those skilled in the art that all or some steps in the above embodiments may be implemented by hardware, or by programs instructing related hardware. The programs may be stored in a computer-readable storage medium. The storage medium described as above may be a red-only memory, a magnetic disc, an optical disc or the like.

The embodiments set forth above are only illustrated as alternative embodiments of the present disclosure, and are not intended to limit the present disclosure. All modifications, equivalent substitutions and improvements made within the spirit and principles of the present disclosure shall fall within the protection scope of the present disclosure.

## Claims

1. A pool waterline detection apparatus, comprising:
an auxiliary container (21) provided with an opening; and
a detection unit (22) positioned on a side of the opening, the detection unit (22) being configured to transmit, to the opening, a probing signal towards an outer side of the auxiliary container (21), to determine a relative position between the waterline detection apparatus and a pool waterline.

2. The pool waterline detection apparatus according to claim 1, wherein the detection unit (22) is arranged on a side of a bottom of the auxiliary container (21) facing away from the opening; and
a transmission part is formed on the bottom of the auxiliary container (21) to transmit the probing signal generated by the detection unit (22).

3. The pool waterline detection apparatus according to claim 1, wherein the bottom of the auxiliary container (21) is provided with a mounting hole; and
the detection unit (22) is arranged on a side of the bottom of the auxiliary container (21) facing towards the opening, the detection unit (22) being arranged in the mounting hole or arranged in an accommodating chamber of the auxiliary container (21) through the mounting hole.

4. A pool cleaning robot comprising:
a housing (1); and
the pool waterline detection apparatus (2) according to any one of claims 1 to 3, wherein the pool waterline detection apparatus (2) is mounted on the housing (1), and an orientation of the opening of the auxiliary container (21) of the pool waterline detection apparatus (2) is consistent with a travel direction of the pool cleaning robot.

5. The pool cleaning robot according to claim 4, wherein the pool waterline detection apparatus (2) comprises a first pool waterline detection apparatus and/or a second pool waterline detection apparatus; the first pool waterline detection apparatus is positioned near a robot head end (121) of the housing (1); and the second pool waterline detection apparatus is positioned near a robot tail end (122) of the housing (1).

6. The pool cleaning robot according to claim 5, wherein the first pool waterline detection apparatus and/or the second pool waterline detection apparatus are arranged on a back (111) of the housing (1).

7. A method for obtaining waterline information, comprising:
obtaining waterline information by means of a detection unit of a pool cleaning robot, the pool cleaning robot moving on a pool wall or pool bottom of a pool, and the waterline information being configured for representing a relative position between the pool cleaning robot and the waterline;
determining a distance between the pool cleaning robot and the waterline on a basis of the waterline information; and
controlling the pool cleaning robot on the basis of the distance between the pool cleaning robot and the waterline.

8. The method according to claim 7, wherein the obtaining the waterline information by means of the detection unit of the pool cleaning robot comprises:
obtaining the waterline information by means of a distance sensor of the pool cleaning robot; or
obtaining the waterline information by means of a liquid depth sensor of the pool cleaning robot; or
obtaining the waterline information by means of a signal receiving sensor of the pool cleaning robot.

9. The method according to claim 8, wherein the obtaining the waterline information by means of the distance sensor of the pool cleaning robot comprises:
sending a probing signal to an upper side or a lower side of the pool cleaning robot by means of the distance sensor;
receiving a reflected signal corresponding to the probing signal, the reflected signal being part of the probing signal reflected after the probing signal comes into contact with the waterline; and
determining the waterline information on the basis of the probing signal and the reflected signal, the waterline information comprising propagation speed of the probing signal in water, and any one of a time difference between sending the probing signal and receiving the reflected signal, a phase difference between the probing signal and the reflected signal, and an angle difference between the probing signal and the reflected signal.

10. The method according to claim 9, wherein the determining the distance between the pool cleaning robot and the waterline on the basis of the waterline information comprises:
determining the distance between the pool cleaning robot and the waterline on the basis of any one of the time difference between sending the probing signal and receiving the reflected signal, the phase difference between the probing signal and the reflected signal and the angle difference between the probing signal and the reflected signal, and the propagation speed of the probing signal in the water.

11. The method according to claim 8, wherein the obtaining the waterline information by means of the distance sensor of the pool cleaning robot comprises:
collecting an image of an upper side or a lower side of the pool cleaning robot by means of the distance sensor; and
obtaining the waterline information by performing image recognition on the image, the waterline information comprising a position of the waterline in the image.

12. The method according to claim 11, wherein the determining the distance between the pool cleaning robot and the waterline on the basis of the waterline information comprises:
performing coordinate transformation on the position of the waterline in the image by means of a principle of pinhole imaging to determine the distance between the pool cleaning robot and the waterline.

13. The method according to claim 8, wherein the obtaining the waterline information by means of the liquid depth sensor of the pool cleaning robot comprises:
collecting pressure around the pool cleaning robot by means of the liquid depth sensor; and
determining the waterline information on the basis of the pressure around the pool cleaning robot, the waterline information comprising a depth of the pool cleaning robot in the pool.

14. The method according to claim 13, wherein the determining the distance between the pool cleaning robot and the waterline on the basis of the waterline information comprises:
determining the distance between the pool cleaning robot and the waterline on the basis of the depth of the pool cleaning robot in the pool.

15. An apparatus for obtaining waterline information, comprising:
a waterline information obtaining module configured to obtain waterline information by means of a detection unit of a pool cleaning robot, the pool cleaning robot moving on a pool wall or pool bottom of a pool, and the waterline information being configured for representing a relative position between the pool cleaning robot and the waterline;
a distance determining module configured to determine a distance between the pool cleaning robot and the waterline on the basis of the waterline information; and
a control module configured to control the pool cleaning robot on the basis of the distance between the pool cleaning robot and the waterline.
